# EUROPEAN PATENT APPLICATION

(11) **EP 2 275 244 A1**
(43) Date of publication of application: **19.01.2011**
(21) Application number: 10006432.8
(22) Date of filing: 21.06.2010
(51) Int. Cl.: B29C 45/14, B29C 45/16

(54) **Multicolor molding method, multicolor molding apparatus, and multicolor molded part**

(30) Priority: 06.07.2009 JP 2009159940
(71) Applicant: Sony Corporation, Tokyo 108-0075 (JP)
(72) Inventor: Torimoto, Masashi, Tokyo 108-0075 (JP); Kobayashi, Fujio, Tokyo 108-0075 (JP); Tawara, Masato, Tokyo 108-0075 (JP)
(74) Representative: Müller - Hoffmann & Partner

(57) **Abstract**

A multicolor molding method including: sandwiching, between a first cavity member having a through hole and a second cavity member, a substrate film on which an in-mold layer is formed so that the in-mold layer is positioned between the through hole and the second cavity member, the second cavity member closing one of openings of the through hole; disposing a core in a primary cavity formed of at least the through hole and injecting a first molding material into the primary cavity, to mold a primary molding layer on a surface of which the in-mold layer is transferred; and disposing the core in a secondary cavity and injecting a second molding material into the secondary cavity, to mold a secondary molding layer that covers the in-mold layer, the core being provided with the primary molding layer.

## Description

### Background of the Invention

### 1. Field of the Invention

The present invention relates to a multicolor molding method and a multicolor molding apparatus to mold an integral molding using different resin materials, and to a multicolor molded part.

### 2. Description of the Related Art

In the past, the following two-color molding method has been known. That is, a primary-molding cavity mold and a core mold are clamped first so as to sandwich a substrate sheet on which a design layer and the like are formed, and a primary molding resin that is molten is injected, thereby molding a primary molding resin portion, on the surface of which the design layer is transferred. Then, the core mold on which the primary molding resin portion is mounted and a secondary-molding cavity mold are clamped, and a secondary molding resin is injected, thereby molding a secondary molding resin portion so as to cover the surface of the primary molding resin portion (see, for example, Fig. 9 of Japanese Patent No. 3472403 (hereinafter, referred to as Patent Document 1)). A molded part manufactured by the two-color molding method has an advantage in that the design layer transferred on the primary molding resin portion is protected by the secondary molding resin portion.

### Summary of the Invention

In the case where the design layer is not completely sandwiched between the primary molding resin portion and the secondary molding resin portion to cause the design layer to be partially exposed from a gap between the primary molding resin portion and the secondary molding resin portion, however, the design layer may be peeled off in the gap. In addition, from the gap in which the design layer is exposed, water vapor or the like may come into the inside of the molded part, which may cause the primary molding resin portion and the secondary molding resin portion to be separated. In other words, in the above-mentioned case, the durability of the molded part may be degraded.

Further, in the two-color molding method disclosed in Patent Document 1, in the case where the depth of the primary-molding cavity mold is large, the deformation amount of the substrate sheet at the time when the injection molding is performed on the primary molding resin portion becomes large. When the substrate sheet is significantly deformed, for example, the substrate sheet may rumple, which may hinder the design layer from being properly transferred on the primary molding resin portion. Accordingly, in the two-color molding method disclosed in Patent Document 1, it is difficult to manufacture the molded part having a large depth, and the degree of freedom in the shape of the molded part to be manufactured is low.

In view of the above-mentioned circumstances, it is desirable to provide a multicolor molding method and a multicolor molding apparatus capable of manufacturing a molded part having good durability and a high degree of freedom in the shape, and provide a multicolor molded part manufactured.

According to an embodiment of the present invention, there is provided a multicolor molding method including sandwiching, between a first cavity member having a through hole and a second cavity member, a substrate film on which an in-mold layer is formed so that the in-mold layer is positioned between the through hole and the second cavity member, the second cavity member closing one of openings of the through hole.

A core is disposed in a primary cavity formed of at least the through hole and injecting a first molding material into the primary cavity, to mold a primary molding layer on a surface of which the in-mold layer is transferred.

The core is disposed in a secondary cavity and injecting a second molding material into the secondary cavity, to mold a secondary molding layer that covers the in-mold layer, the core being provided with the primary molding layer.

In the multicolor molding method, the substrate film is sandwiched between the first and second cavity members. Therefore, the deformation amount of the substrate film at the time when the primary molding layer is molded can be sufficiently suppressed. In addition, the in-mold layer is transferred on the part of the surface of the primary molding layer, and thus the entire in-mold layer can be easily covered with the secondary molding layer. As a result, it is possible to manufacture a molded part having a high degree of freedom in the shape.

The second cavity member may include a concave portion that closes the opening of the through hole.

In this case, the sandwiching of the substrate film may include sandwiching the substrate film between the first cavity member and the second cavity member so that the in-mold layer is positioned between the through hole and the concave portion.

Further, the molding of the primary molding layer may include disposing the core in the primary cavity formed of the through hole and the concave portion and injecting the first molding material into the primary cavity, to mold the primary molding layer on the surface of which the in-mold layer is transferred.

In the multicolor molding method, the primary cavity is formed of the through hole and the concave portion, and the substrate film is sandwiched between the first and second cavity members. Therefore, the deformation of the substrate film at the time when the primary molding layer is molded occurs mainly in the primary cavity. Accordingly, the deformation amount of the substrate film can be suppressed to be small. In addition, the shape of the concave portion is set as appropriate, with the result that the primary molding layer having a high degree of freedom in the shape can be manufactured.

At least a part of the in-mold layer may be sandwiched between the first cavity member and the second cavity member in an area where a rim of the through hole and a rim of the concave portion are in contact.

In this case, the molding of the primary molding layer may include taking the primary molding layer from the primary cavity so that the in-mold layer is cut in the area where the rim of the through hole and the rim of the concave portion are in contact.

At the time of performing the injection molding of the primary molding layer, if the substrate film is cut off, it becomes difficult to position of the in-mold layer with respect to the primary molding layer. However, in the multicolor molding method according to this embodiment, because the deformation amount of the substrate film is small, it is possible to use the shapes of the through hole and the concave portion so that only the in-mold layer is cut off in the area where the rim of the through hole and the rim of the concave portion are in contact. As a result, the primary molding layer having a high degree of freedom in the shape can be manufactured.

The through hole may include a protrusion hole that protrudes from an inner surface of the through hole. In this case, the molding of the primary molding layer may include molding the primary molding layer having a protrusion portion corresponding to the protrusion hole.

In related art, as a typical shape of the primary cavity, a shape that prevents the substrate film from being cut is called for, which limits the shape of the primary molding layer to be molded. In contrast, in the multicolor molding method according to this embodiment, the substrate film is not disposed on the inner surface of the through hole. Therefore, the protrusion hole can be formed in the inner surface of the through hole, and the primary molding layer including the protrusion portion can be molded.

The first cavity member may include a gate connected to the through hole. In this case, the molding of the primary molding layer may include injecting the first molding material into the primary cavity through the gate.

The substrate film is sandwiched between the first and second cavity members, thereby making it possible to provide the gate at the desired position of the first cavity member. There is no need to provide a gate to the core mold. As a result, the structure of the gate can be made to be simple.

The first cavity member may include a gate connected to the protrusion hole. In this case, the molding of the primary molding layer may include injecting the first molding material into the primary cavity through the gate.

The substrate film is sandwiched between the first and second cavity members, thereby making it possible to provide the gate at the desired position of the first cavity member. When the gate connected to the protrusion hole is formed as in the multicolor molding method according to this embodiment, the first molding material can be sufficiently injected into the protrusion hole, with the result that the primary molding layer having the protrusion portion can be reliably molded.

The first cavity member may include the through hole that is plurally provided.

In this case, the sandwiching of the substrate film may include sandwiching the substrate film between the first cavity member and the second cavity member so that the in-mold layer is positioned between the plurality of through holes and the second cavity member, the second cavity member closing openings of the plurality of through holes on one side.

Further, the molding of the primary molding layer may include disposing, in the primary cavity that is plurally provided and formed of at least the plurality of through holes, the core that is plurally provided, and injecting the first molding material into the plurality of primary cavities, to mold the primary molding layer that is plurally provided, on the surface of which the in-mold layer is transferred.

Furthermore, the molding of the secondary molding layer may include disposing, in the secondary cavity that is plurally provided, the plurality of cores on each of which the primary molding layer is formed, and injecting the second molding material into the plurality of secondary cavities, to mold the secondary molding layer that is plurally provided and covers the in-mold layer.

In related art, in the case where the plurality of primary molding layers are molded together, the substrate film is deformed in each of the plurality of primary cavities, which increases the deformation amount of the substrate film. In contrast, the multicolor molding method according to this embodiment is effective for molding the plurality of primary molding layers together, because the deformation amount of the substrate film can be suppressed to be small.

According to another embodiment of the present invention, there is provided a multicolor molding apparatus including a primary-molding cavity mold, a core mold, and a secondary-molding cavity mold.

The primary-molding cavity mold includes a first cavity member and a second cavity member, and the primary-molding cavity mold is capable of separating the first cavity member and the second cavity member from each other. The first cavity member has a through hole as a part of a primary cavity, and the second cavity member closes one of openings of the through hole.

The core mold includes a core disposed in the primary cavity, and the core mold is clamped with the primary-molding cavity mold to perform injection molding of a primary molding layer.

The secondary-molding cavity mold has a secondary cavity in which the core provided with the primary molding layer is disposed, and the secondary-molding cavity mold is clamped with the core mold to mold a secondary molding layer that covers the primary molding layer.

The second cavity member may include a concave portion that is a part of the primary cavity and closes the opening of the through hole.

The through hole may have a protrusion hole that protrudes from an inner surface of the through hole so that injection molding of the primary molding layer including a protrusion portion is performed.

The first cavity member may include a gate connected to the through hole.

The first cavity member may include a gate connected to the protrusion hole.

According to another embodiment of the present invention, there is provided a multicolor molded part including a primary molding layer, an in-mold layer, and a secondary molding layer.

The in-mold layer is transferred on a part of a surface of the primary molding layer.

The secondary molding layer is formed on the surface of the primary molding layer and entirely covers the in-mold layer to prevent the in-mold layer from being exposed.

As described above, according to the present invention, the molded part having the high degree of freedom in the shape can be manufactured.

These and other objects, features and advantages of the present invention will become more apparent in light of the following detailed description of best mode embodiments thereof, as illustrated in the accompanying drawings.

### Brief Description of Drawings

Fig. 1 is a schematic cross-sectional view showing a main part of a multicolor molding apparatus according to a first embodiment;
Fig. 2 is a schematic cross-sectional view showing a main part of the multicolor molding apparatus according to the first embodiment;
Figs. 3 are schematic cross-sectional views sequentially showing a molding process of the primary molding layer according to the first embodiment;
Fig. 4 is a schematic cross-sectional view showing a substrate film according to embodiments;
Figs. 5 are schematic cross-sectional views sequentially showing a molding process of a secondary molding layer that covers the primary molding layer according to the first embodiment;
Fig. 6 is a schematic perspective view showing a multicolor molded part molded by a multicolor molding method according to the first embodiment;
Fig. 7 is a schematic perspective view showing a multicolor molded part according to a second embodiment;
Figs. 8 are schematic cross-sectional views each showing a part of a molding process of the multicolor molded part according to the second embodiment;
Fig. 9 is a schematic perspective view of a multicolor molded part according to a third embodiment;
Fig. 10 is a schematic perspective view showing primary and secondary molding layers that are molded by a multicolor molding method according to a fourth embodiment;
Fig. 11 is a schematic perspective view showing a multicolor molded part according to the fourth embodiment;
Figs. 12 are schematic cross-sectional views each showing a molding process of a multicolor molded part according to a fifth embodiment;
Figs. 13 are diagrams each showing a modified example of the multicolor molding method, the multicolor molding apparatus, and the multicolor molded part according to the first embodiment; and
Fig. 14 is a diagram showing a modified example of the multicolor molding method, the multicolor molding apparatus, and the multicolor molded part according to the first embodiment.

### Description of Preferred Embodiments

Hereinafter, embodiments of the present invention will be described with reference to the drawings.

### <First embodiment>

A description will be given on a multicolor molding method according a first embodiment of the present invention, a multicolor molding apparatus used in the method, and a multicolor molded part manufactured.

### (Structure of multicolor molding apparatus)

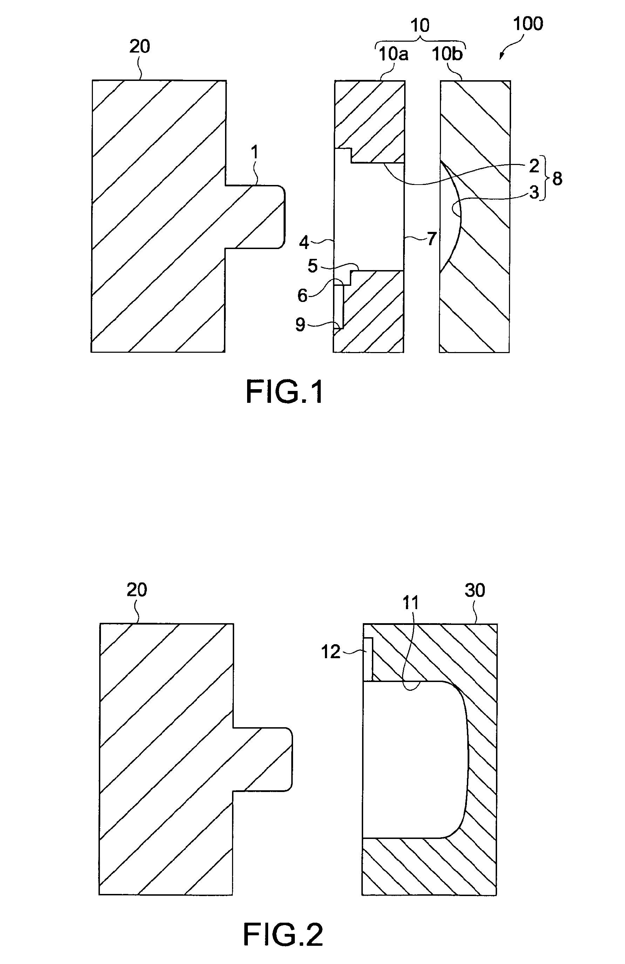

Figs. 1 and 2 are schematic cross-sectional views each showing a main part of the multicolor molding apparatus according to the first embodiment of the present invention. As shown in Fig. 1, a multicolor molding apparatus 100 according to this embodiment includes a primary-molding cavity mold 10 and a core mold 20. The core mold 20 is disposed to be opposed to the primary-molding cavity mold 10 and is clamped with the primary-molding cavity mold 10. The core mold 20 has a core 1.

The primary-molding cavity mold 10 includes a first cavity member 10a and a second cavity member 10b. The first cavity member 10a has a through hole 2, and the second cavity member 10b has a concave portion 3. The first cavity member 10a is disposed to be opposed to the core mold 20. The second cavity member 10b is disposed on a side of the first cavity member 10a which is opposite to the side on which the core mold 20 is disposed. The first and second cavity members 10a and 10b are disposed so that the through hole 2 of the first cavity member 10a and the concave portion 3 of the second cavity member 10b are opposed to each other. In addition, on a rim of an opening 4 of the through hole 2 of the first cavity member 10a which is opposed to the core mold 20, a flange area 6 for forming a flange portion is formed.

The first and second cavity members 10a and 10b are disjunctively moved relatively to each other by a guide mechanism (not shown). When the first and second cavity members 10a and 10b are connected, an opening 7 of the through hole 2 which is opposite to the opening 4 is covered with the concave portion 3. The through hole 2 and the concave portion 3 form a primary cavity 8 that contains the core 1 of the core mold 20. Further, the first cavity member 10a has a gate 9 connected with the flange area 6 of the through hole 2. Furthermore, the core mold 20 and the primary-molding cavity mold 10 (and a secondary-molding cavity mold 30 to be described later) are also disjunctively moved relatively to each other by the guide mechanism (not shown). When the core mold 20 and the primary-molding cavity mold 10 perform relative movement, in conjunction with the movement, the first and second cavity members 10a and 10b perform the relative movement.

To dispose a substrate film (described later) between the first and second cavity members 10a and 10b, the first and second cavity members 10a and 10b are capable of being separated as described above.

As shown in Fig. 2, the multicolor molding apparatus 100 has the secondary-molding cavity mold 30 that is clamped with the core mold 20. The secondary-molding cavity mold 30 has a secondary cavity 11 that is provided with a primary-molding layer (described later) and contains the core 1. Further, a gate 12 connected to the secondary cavity 11 is formed in the secondary-molding cavity mold 30.

Examples of the material of the first cavity member 10a, the second cavity member 10b, the core mold 20, and the secondary-molding cavity mold 30 include metals such as stainless steel, iron, and aluminum and a plastic material.

In the multicolor molding apparatus 100 according to this embodiment, the core mold 20 can be moved between a position opposed to the primary-molding cavity mold 10 a position opposed to and the secondary-molding cavity mold 30. As an example of such a structure, given is a rotary type structure in which the core mold 20 is provided on a rotary table (not shown) that is rotatable, and the rotary table is rotated, thereby moving the core mold 20. In addition to the rotary type structure, a slide type structure in which the core mold 20 is slid between the primary-molding cavity mold 10 and the secondary-molding cavity mold 30 may be used.

Further, the multicolor molding apparatus of this embodiment is used as a horizontal molding apparatus but may be used as a vertical molding apparatus.

### (Multicolor molding method)

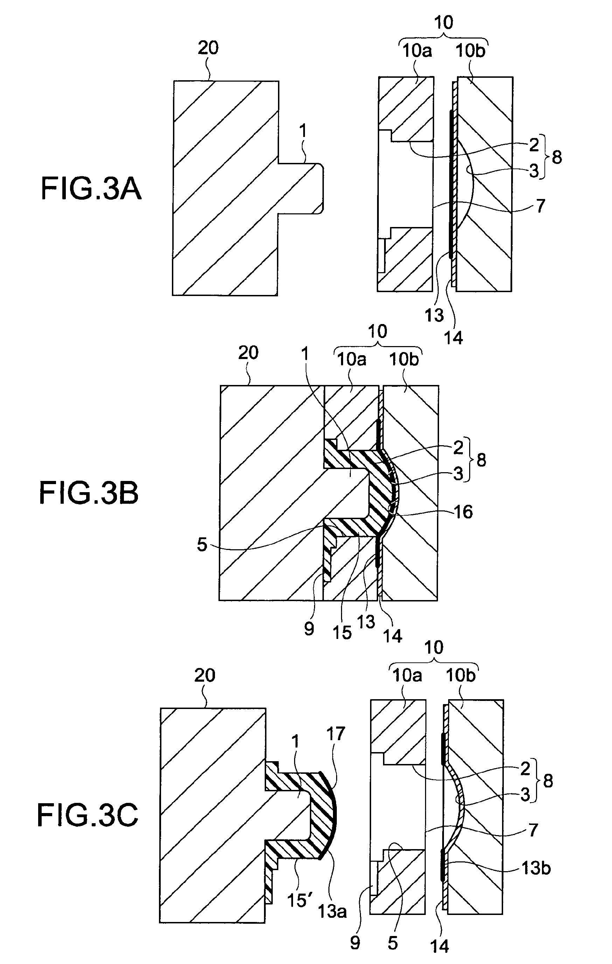

The multicolor molding method in which the multicolor molding apparatus 100 having the above-described structure is used will be described. Figs. 3A to 3C are schematic cross-sectional views sequentially showing a molding process of a primary molding layer.

As shown in Fig. 3A, between the first and second cavity members 10a and 10b separated, a substrate film 14 is disposed. On the substrate film 14, an in-mold layer 13 is formed. The substrate film 14 is disposed so that the in-mold layer 13 is opposed to the through hole 2 of the first cavity member 10a. Further, in this embodiment, the substrate film 14 is disposed so that the in-mold layer 13 is positioned between the opening 7 of the through hole 2 and the concave portion 3 of the second cavity member 10b. The substrate film 14 is supplied from the outside of the multicolor molding apparatus 100 by using, for example, a roll-to-roll system with a take-up apparatus and a sending apparatus (not shown).

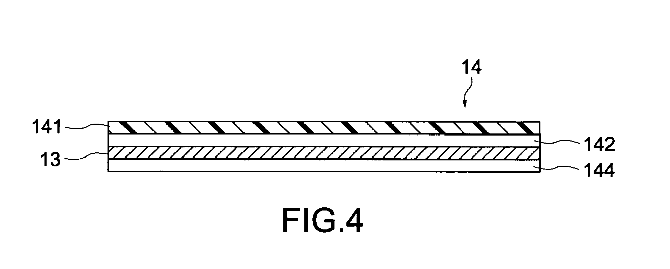

Fig. 4 is a schematic cross-sectional view showing the substrate film 14. The substrate film 14 has a laminated structure of a base film 141, a first bonding layer 142, the in-mold layer 13, and a second bonding layer 144. As the material of the base film, PET (polyethylene terephthalate), acrylic, or the like is used. The in-mold layer 13 is bonded to the base film 141 by the first bonding layer 142.

The in-mold layer 13 functions as a printing layer for transferring a design, a character, or the like on the surface of the primary molding layer. In addition to this, as the in-mold layer 13, various wiring layers, an information recording layer, an electrical element such as a solar cell, or an optical element may be used. The second bonding layer 144 formed on the surface of the in-mold layer 13 is made of a resin or the like having thermo-sensitivity or pressure sensitivity.

As shown in Fig. 3B, the core mold 20 and the primary-molding cavity mold 10 are clamped. Further, the first and second cavity members 10a and 10b are connected to each other. The through hole 2 and the concave portion 3 form the primary cavity 8. In the primary cavity 8, the core 1 is disposed. The substrate film 14 is disposed in the primary cavity 8.

Through the gate 9 formed on the first cavity member 10a, a primary molding resin 15 molten at a high temperature is injected from a sprue or a runner (not shown) into the primary cavity 8 in which the core 1 is disposed. As the primary molding resin 15, used is a general-purpose resin such as an ABS (acrylonitrile butadiene styrene) resin, a PC (polycarbonate) resin, or engineering plastic such as a mixed resin of the ABS and PC resin. In addition, the color of the primary molding resin 15 is not particularly limited, and may be nontransparent, transparent, or translucent.

The primary molding resin 15 is injected into the primary cavity 8 so as to pressurize the inner surface of the primary cavity 8, that is, an inner surface 5 of the through hole 2 and an inner surface 16 of the concave portion 3. At this time, the substrate film 14 provided in the primary cavity 8 is also pressurized by the primary molding resin 15 and is deformed to be pressed against the inner surface 16 of the concave portion 3.

The heat of the primary molding resin 15 melts the second bonding layer 144 provided on the surface of the in-mold layer 13, thereby bonding the in-mold layer 13 to the surface of the primary molding resin 15 that pressurize the concave portion 3.

As described above, in the multicolor molding method of this embodiment, because the substrate film 14 is sandwiched between the first and second cavity members 10a and 10b, the deformation of the substrate film 14 at the time when the primary molding resin 15 is injected is mainly caused in the concave portion 3. That is, the substrate film 14 is prevented from being deformed to be pressed against the inner surface 5 of the through hole 2. Thus, a drawing amount of the substrate film 14 is reduced, with the result that the deformation amount of the substrate film 14 can be made to be small.

Further, in a direction in which the core 20 and the primary-molding cavity mold 10 are clamped, even if the thickness of the first cavity member 10a is increased, and the length of the inner surface 5 (depth) of the through hole 2 is increased, the deformation amount of the substrate film 14 is hardly changed. Therefore, the depth of the primary cavity 8 can be increased, and a molded part having a high degree of freedom in the shape can be manufactured.

The structure of the sprue and the runner is not particularly limited. In the multicolor molding method and the multicolor molding apparatus 100 of this embodiment, the substrate film 14 is sandwiched between the first and second cavity members 10a and 10b, and therefore the gate 9 can be provided at the desired position of the first cavity member 10a.

Accordingly, it is unnecessary to provide a gate for the core mold 20, with the result that the gate 9 and the runner, the sprue, and the like connected to the gate 9 can be easily structured.

The primary-molding cavity mold 10 and the core mold 20 are cooled, and the clamped state is released as shown in Fig. 3C. To the core 1 taken out of the primary cavity 8, a primary molding layer 15' obtained by solidifying the primary-molding resin 15 is formed. At this time, the in-mold layer 13 is divided into an in-mold layer 13a and an in-mold layer 13b. The in-mold layer 13b between the opening 7 of the through hole 2 of the first cavity member 10a and the concave portion 3 of the second cavity member 10b is cut. The in-mold layer 13a that is removed from the substrate film 14 is transferred on a surface 17 (hereinafter, referred to as bonding surface 17) corresponding to the shape of the concave portion 3 of the second cavity member 10b. The bonding surface 17 forms a part of the surface of the primary molding layer 15'. The substrate film 14 is not cut.

If the substrate film 14 is cut at the time when the injection molding of the primary molding layer 15' is performed, the sending or the like of the substrate film 14 is difficult to be performed, and the positioning of the in-mold layer 13 with respect to the primary molding layer to be subsequently molded is difficult to be performed. Therefore, in related art, it may be impossible to provide a part having a small R (curvature radius) to the inner surface of the primary cavity against which the substrate film is pressed. However, in the multicolor molding method of this embodiment, because the deformation amount of the substrate film 14 is small, the shapes of the through hole 2 and the concave portion 3 can be set as appropriate within the range in which only the in-mold layer 13 is cut in the part where the rim of the through hole 2 and the rim of the concave portion 3 are in contact. For example, the shapes of the through hole 2 and the concave portion 3 are set as appropriate, and the R (curvature radius) of the part where the rim of the through hole 2 and the rim of the concave portion 3 are in contact can be set to be small. As a result, the primary molding layer 15' having the high degree of freedom in the shape can be molded.

Further, as shown in Fig. 3C, the first and second cavity members 10a and 10b are separated, and the substrate film 14 is sent out. The assumption is made that the substrate film 14 is deformed to press the entire inner surface of the primary cavity 8 as in related art. In this case, if the primary cavity 8 is deep, it is difficult to take out the substrate film 14 from the primary cavity 8, with the result that it may be impossible to send out the substrate film 14. In this embodiment, however, the substrate film 14 is deformed in the concave portion 3 of the second cavity member 10b, and the deformation amount is small. Thus, the substrate film 14 is easily taken out of the concave portion 3, preventing the above-mentioned problem of related art.

In Figs. 3B and 3C, timings at which the first and second cavity members 10a and 10b are connected and separated and a distance by which the first and second cavity members 10a and 10b are separated may be set as appropriate. For example, before the primary-molding cavity mold 10 and the core mold 20 are clamped with each other, the first and second cavity members 10a and 10b may be connected. In addition, after the core 1 to which the primary molding layer 15' is provided is taken out of the cavity 8, the first and second cavity members 10a and 10b may be separated.

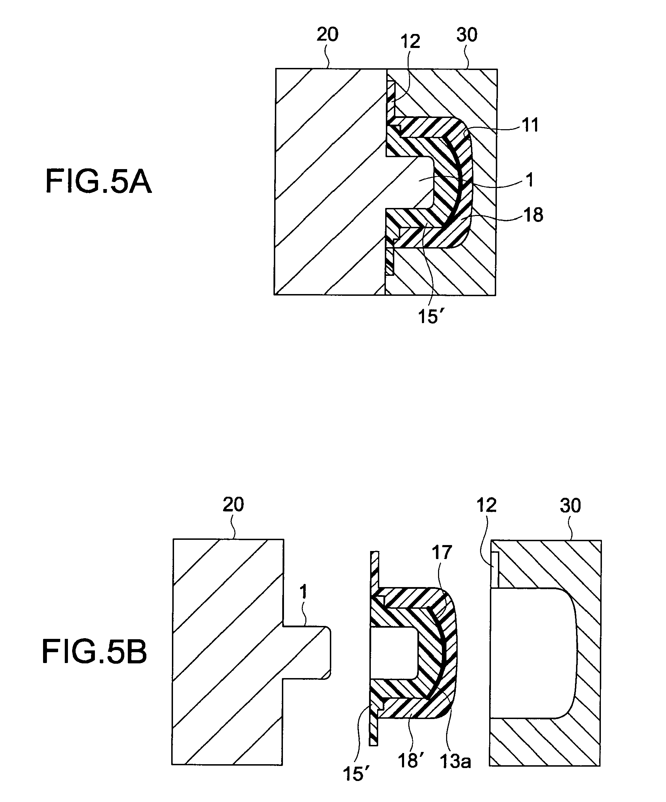

Figs. 5A and 5B are schematic cross-sectional views sequentially showing the molding process of a secondary molding layer that covers the primary molding layer 15'. As shown in Fig. 5A, the core 1 to which the primary molding layer 15' is provided is moved to a position opposed to the secondary-molding cavity mold 30, and the core mold 20 and the secondary-molding cavity mold 30 are clamped. In this embodiment, the secondary cavity 11 that contains the entire primary molding layer 15' is provided.

Through the gate 12 connected with the secondary cavity 11, a secondary molding resin 18 is injected into the secondary cavity 11. As the secondary molding resin 18, an optically-transparent resin such as PMMA (polymethylmethacrylate (acrylic)), a PC, and a PS (polystyrene) is used.

The secondary-molding cavity mold 30 and the core mold 20 are cooled, and as shown in Fig. 5B, the clamped state is released. On the core 1 taken out of the secondary cavity 11, a secondary molding layer 18' that covers the entire primary molding layer 15' is formed. The secondary molding layer 18' covers the entire in-mold layer 13a so as not to cause the in-mold layer 13a to be exposed.

In this embodiment, the structure in which the secondary molding layer 18' covers the entire primary molding layer 15' is used, but the structure is not limited to this. The secondary molding layer 18' may be molded into various shapes. As described above, the in-mold layer 13a is provided on the bonding surface 17 as a part of the surface of the primary molding layer 15', and thus the secondary molding layer 18' that covers the entire in-mold layer 13a can be easily molded.

### (Multicolor molded part)

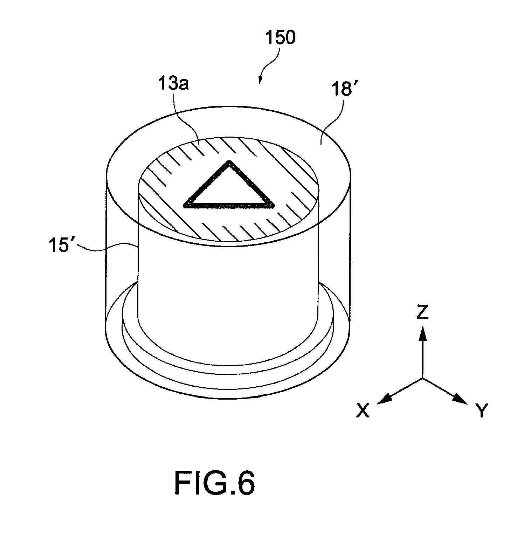

Fig. 6 is a schematic perspective view showing a multicolor molded part molded by the multicolor molding method described above. In the process shown in Fig. 5B, a part molded into the shape of the gate 9 of the primary molding layer 15' and a part molded into the shape of the gate 12 of the secondary molding layer 18' are cut off, thereby obtaining a multicolor molded part 150 shown in Fig. 6.

As described above, in the multicolor molding method according to this embodiment, a molded part can be obtained using the deep primary cavity 8. Therefore, the multicolor molded part 150 having a desired height (size in a Z direction shown in Fig. 6) can be obtained. The multicolor molded part 150 can be molded to have the desired height, and therefore can be effectively used as a member for pressing a tact switch in a controller in accordance with a pressing operation by a user, such as a button provided to a controller for a home-use game machine.

Further, in this embodiment, the in-mold layer 13a is not exposed to outside, which prevents the in-mold layer 13a from peeling off due to an external shock or getting stuck with another part, for example. Further, water vapor or the like is prevented from getting into the inside of the multicolor molded part 150, so the primary molding layer 15' and the secondary molding layer 18' are not separated. In addition, the in-mold layer 13a is transferred only on the bonding surface 17 of the primary molding layer 15', and therefore the primary molding layer 15' and the secondary molding layer 18' are directly bonded to each other. For those reasons, the multicolor molded part 150 having good durability is manufactured, which is effective for the case where the multicolor molded part 150 is used as a member that is frequently used by the user, such as the button given in the above example.

### <Second embodiment>

A multicolor molding method, a multicolor molding apparatus, and a multicolor molded part according to a second embodiment of the present invention will be described. In the following, descriptions on structures and functions that are the same as those of the multicolor molding method, the multicolor molding apparatus 100, and the multicolor molded part 150 described in the first embodiment will be omitted or simplified.

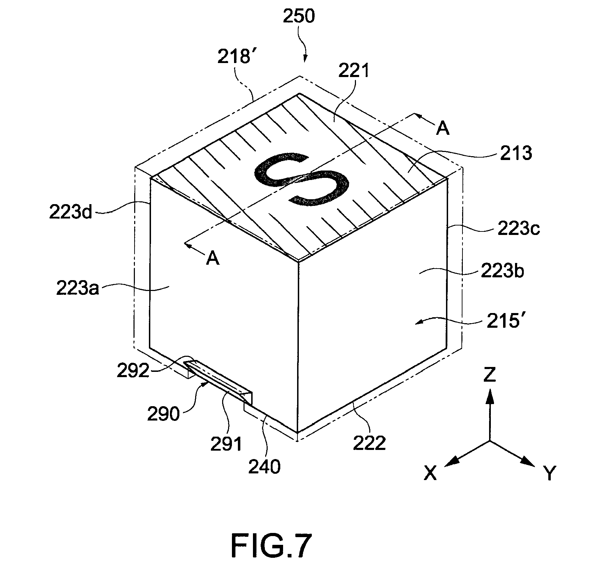

Fig. 7 is a schematic perspective view showing a multicolor molded part according to this embodiment. A multicolor molded part 250 is substantially cubic in external shape, and includes a primary molding layer 215' having an upper surface 221, a lower surface 222, side surfaces 223a, 223b, 223c, and 223d. On the upper surface 221, an in-mold layer 213 is transferred, that is, the upper surface 221 serves as a bonding surface described in the first embodiment.

On the side surface 223a, a protrusion portion 290 is formed. The protrusion portion 290 functions as an engagement portion at a time when the multicolor molded part 250 is mounted on an apparatus or the like (not shown), for example. The protrusion portion 290 is provided on an edge 240 of the side surface 223a on the lower surface 222 side and has an inclined lower surface 291 that is slantingly extended toward the upper surface 221 side (in the Z direction shown in Fig. 7) from the edge 240. In addition, the protrusion portion 290 has an inclined upper surface 292 that is slantingly extended from the side surface 223a toward the upper surface 221 side so as to be connected with the inclined lower surface 291. The part at which the inclined lower surface 291 and the inclined upper surface 292 are connected with each other has an edged shape whose R is small.

In addition, the multicolor molded part 250 includes a secondary molding layer 218' that covers the primary molding layer 215'. As shown in Fig. 7, the secondary molding layer 218' entirely covers the upper surface 221 and the side surfaces 223b, 223c, and 223d, and covers the side surface 223a excluding an area of the protrusion portion 290. The secondary molding layer 218' covers the entire in-mold layer 213.

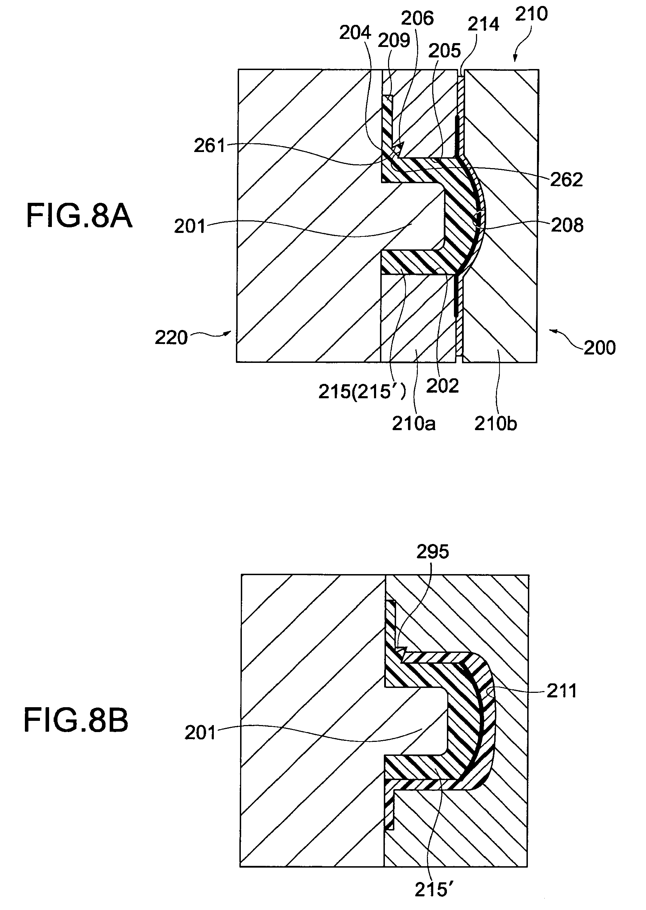

Figs. 8A and 8B are schematic cross-sectional views showing a part of the molding process of the multicolor molded part 250. Fig. 8 shows the cross section of the multicolor molded part 250 taken along the line A-A of Fig. 7.

Fig. 8A is a diagram showing a process of performing the injection molding on the primary molding layer 215' of the multicolor molded part 250. A multicolor molding apparatus 200 according to this embodiment includes a first cavity member 210a having a protrusion hole 206 formed in a part of a rim of an opening 204 of a through hole 202. The protrusion hole 206 is formed so as to protrude from an inner surface 205 of the through hole 202. A primary molding resin 215 is injected into the protrusion hole 206, thereby forming the protrusion portion 290 of the primary molding layer 215'. A first protrusion hole surface 261 shown in Fig. 8A is corresponded to the inclined lower surface 291 of the protrusion portion 290, and a second protrusion surface 262 shown in Fig. 8A is corresponded to the inclined upper surface 292 of the protrusion portion 290.

In the first cavity member 210a, a gate 209 connected with the protrusion hole 206 is formed. Through the gate 209, the primary molding resin 215 is injected into the primary cavity 208. Because the gate 209 is connected with the protrusion hole 206, the primary molding resin 215 can be sufficiently injected even into an edged end portion at which the first protrusion hole surface 261 and the second protrusion hole surface 262 are connected. With this structure, the primary molding resin 215 can be sufficiently injected. As a result, the primary molding layer 215' having the protrusion portion 290 can be reliably molded.

As described in the above embodiment, in related art, a shape of the primary cavity that prevents the substrate film 214 that is not cut is demanded, which restricts the shape of the primary molding layer 215' to be molded. In the multicolor molding method of this embodiment, however, a primary-molding cavity mold 210 is divided into the first cavity member 210a and a second cavity member 210b, and the substrate film 214 is sandwiched therebetween. Thus, the substrate film 214 is not provided on the inner surface 205 of the through hole 202. Therefore, the protrusion hole 206 can be formed in the inner surface 205 of the through hole 202, with the result that the primary molding layer 215' having the protrusion portion 290 can be molded.

It should be noted that the shape of the protrusion hole 206, the formation position of the protrusion hole 206, the structure of the primary-molding cavity mold 210, or the like are set as appropriate so that a core 201 to which the primary molding layer 215' is formed is taken out of the primary cavity 208 when the clamped state of the primary-molding cavity mold 210 and the core mold 220 is released.

As shown in Fig. 8B, in the secondary cavity 211, a notch 295 corresponding to the protrusion portion 290 of the primary molding layer 215' is formed. The core 201 to which the primary molding layer 215' is provided is disposed in the secondary cavity 211, and the secondary molding layer 218' that covers the surface of the primary molding layer 215' is molded.

### <Third embodiment>

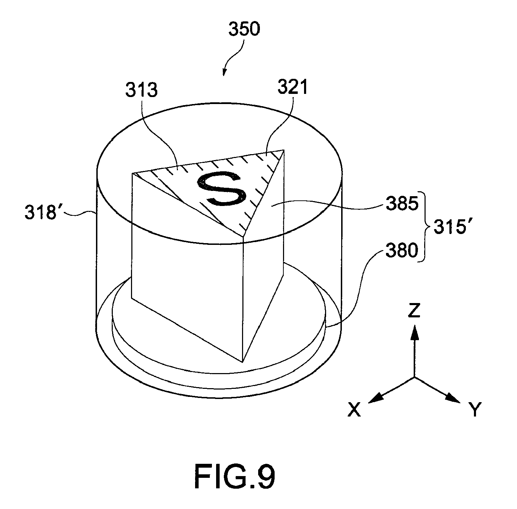

Fig. 9 is a schematic perspective view of a multicolor molded part according to a third embodiment of the present invention. A multicolor molded part 350 of this embodiment includes a primary molding layer 315' constituted of a flange portion 380 and a triangular prism portion 385. An upper surface 321 of the triangular prism portion 385 serves as a bonding surface of this embodiment, and an in-mold layer 313 is transferred on the upper surface 321. A secondary molding layer 318' is molded so as to cover the entire primary molding layer 315', and the secondary molding layer 318' covers the entire in-mold layer 313.

In this embodiment, the shape of the cross section of a through hole viewed in a direction in which a primary-molding cavity mold and a core mold are clamped is set to be approximately triangular, thereby molding the triangular prism portion 385 of the primary molding layer 315'. In this way, by setting the shape of the cross section of the through hole as appropriate, the primary molding layer 315' having various shapes can be molded.

As a modified example of this embodiment, the through hole may be formed so that an opening area of the through hole is gradually reduced from a side opposed to the core mold of the through hole toward a side opposed to the second cavity member. With this structure, a primary molding layer in which the area of a surface opposite to a bonding surface is larger than the area of the bonding surface is molded, and a side surface of the primary molding layer is molded to be inclined.

As described above, in this embodiment, the shape of the entire through hole is set as appropriate, and the primary molding layer having a high degree of freedom in the shape can be molded. It should be noted that the shape of the entire through hole is set within the range in which the core to which the primary molding layer is provided can be taken out of the primary cavity after the primary molding layer 315' is molded and before the secondary molding layer 318' is molded. In this embodiment, the setting range of the shape of the entire through hole is large, because the substrate film is not provided on the inner surface of the through hole and the degree of freedom in the formation position of the gate in the first cavity member is high.

In addition, the shape of the secondary molding layer can also be appropriately set irrespective of the shape of the primary molding layer. That is, in this embodiment, by combining the primary molding layer with the secondary molding layer, a multicolor molded part having a high design quality can be molded. In the same way, color combination of the primary molding layer and the secondary molding layer can also be set as appropriate. For example, in the multicolor molded part 350 shown in Fig. 9, when the primary molding layer 315' and the secondary molding layer 318' are formed to be transparent, the in-mold layer 313 appears to float in the multicolor molded part 350. In short, in this embodiment, the shapes, colors, materials, and the like of the primary molding layer 315' and the secondary molding layer 318' are set as appropriate, with the result that visual effects of the multicolor molded part 350 can be upgraded.

### <Fourth embodiment>

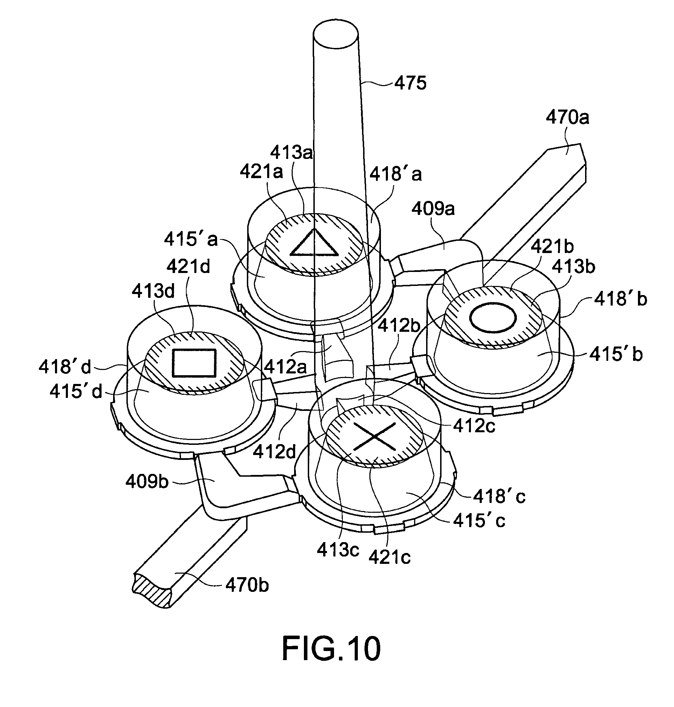

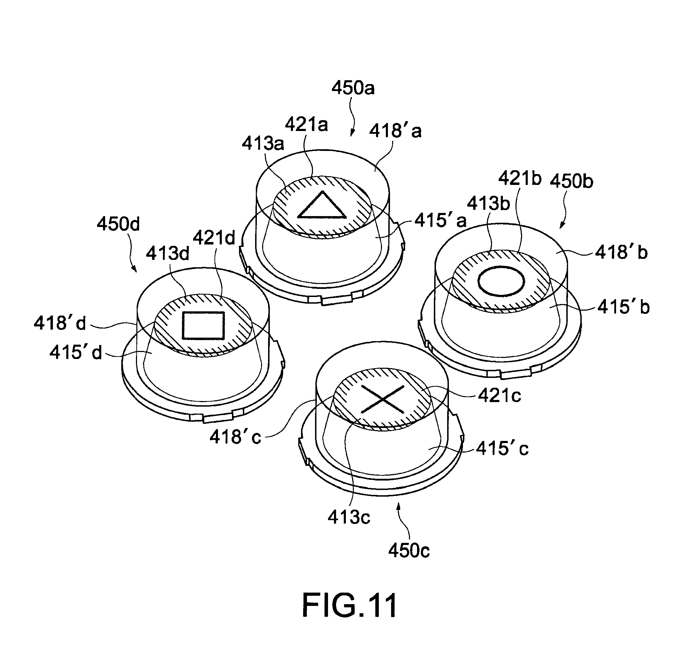

A multicolor molding method, a multicolor molding apparatus, and a multicolor molded part according to a fourth embodiment of the present invention will be described. Fig. 10 is a schematic perspective view showing primary and secondary molding layers that are molded by the multicolor molding method according to this embodiment. Fig. 11 is a schematic perspective view showing a multicolor molded part according to this embodiment.

In the multicolor molding method according to this embodiment, a core mold provided with four cores and a primary-molding cavity mold provided with four primary cavities are used.

As shown in Fig. 10, four primary molding layers 415'a to 415'd are molded together. On upper surfaces (bonding surfaces) 421a to 421d of the primary molding layers 415'a to 415'd, in-mold layers 413a to 413d are transferred, respectively. The in-mold layers 413a to 413d have different designs. To cover the in-mold layers 413a to 413d, secondary molding layers 418'a to 418'd are molded, respectively, as shown in Fig. 10.

The primary molding layers 415'a and 415'b are connected to a runner portion 470a and a gate portion 409a. The "runner portion" and the "gate portion" refer to the primary molding resin 415 that is injected to a runner and a gate (not shown) formed in this embodiment and solidified. In the same way, hereinafter, the primary molding resin 415 that is injected to a sprue (not shown) formed in this embodiment and solidified is referred to as a "sprue portion".

The primary molding layers 415'a and 415'b are molded by injecting the primary molding resin 415 into the primary cavity (not shown) through the runner corresponding to the runner portion 470a and the gate corresponding to the gate portion 409a.

In the same way, the primary molding layers 415'c and 415'd are molded by injecting the primary molding resin 415 into the primary cavity through a runner corresponding to a runner portion 470b and a gate corresponding to a gate portion 409b.

In addition, in this embodiment, at the center of an area where the four primary cavities (not shown) are disposed, a sprue (not shown) is provided. Further, to the sprue, a plurality of gates (not shown) connected to the primary cavities, respectively, are connected. To mold the four primary molding layers 415'a to 415'd, the primary molding resin 415 is injected to the primary cavities from the four gates. As described in the above embodiments, the gates used for molding the primary molding layers 415'a to 415'd can be formed at the desired positions of the first cavity member (not shown). Accordingly, as in this embodiment, the structure in which the primary molding resin 415 is injected to the plurality of primary cavities from the one sprue can be easily implemented. As a result, the structure of the multicolor molding apparatus becomes simple.

Further, in related art, in the case where a plurality of primary molding layers are molded together, a substrate film (not shown) is deformed in a plurality of primary cavities, which increases the deformation amount of the substrate film. However, because the deformation amount of the substrate film can be small as described in the above embodiments, the multicolor molding method of this embodiment is effective for molding the plurality of primary molding layers 415'a to 415'd together.

The secondary molding layers 418'a to 418'd are molded using a sprue similar to the sprue used for molding the primary molding layers 415'a to 415'd described above. A sprue portion 475 shown in Fig. 10 corresponds to the sprue. That is, the sprue (sprue portion 475) is provided at the center portion of the four primary molding layers 415'a to 415'd. In addition, to the sprue (sprue portion 475), a plurality of gates (to which gate portions 412a to 412d correspond) connected to secondary cavities (not shown) are connected. With this structure, a secondary molding resin 418 supplied into one sprue (sprue portion 475) is injected through the gates (gate portions 412a to 412d), thereby molding the four secondary molding layers 418'a to 418'd. In this way, the structure of the sprue (sprue portion 475) for molding the secondary molding layers 418'a to 418'd is formed similarly to the structure of the sprue for molding the primary molding layers 415'a to 415'd, which can make the structure of the multicolor molding apparatus simple.

Multicolor molded parts 450a to 450d shown in Fig. 11 are used as a set of buttons corresponding to four options, which is equipped for a controller of a home-use game machine, for example. It should be noted that the number of the multicolor molded parts 450a to 450d is not limited to four, and a desired number of multicolor molded parts can be molded together.

### <Fifth embodiment>

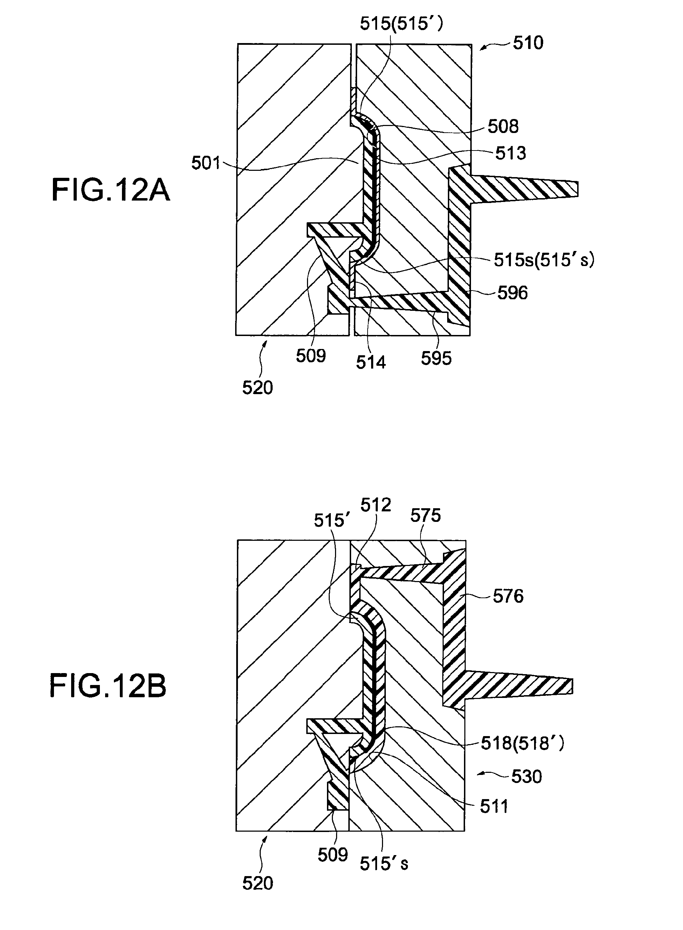

A multicolor molded part according to a fifth embodiment of the present invention will be described. Figs. 12A and 12B are schematic cross-sectional views each showing a molding process of the multicolor molded part according to this embodiment. Fig. 12A shows a process of molding a primary molding layer 515'. In the figure, a core mold 520 having a core 501 and a primary-molding cavity mold 510 having a primary cavity 508 are clamped.

The primary-molding cavity mold 510 used in this embodiment is not provided with a first cavity member and a second cavity member that can be separated. The shape of the primary cavity 8 is set so as not to cut a substrate film 514 described later.

In the core mold 520, a submarine gate 509 used for injecting a primary molding resin 515 is formed. The submarine gate 509 is communicated with a sprue 595 and a runner 596. The gate formed in the core mold 520 is not limited to the submarine gate 509. For example, a banana gate or the like may be formed in the core mold 520.

Between the core mold 520 and the primary-molding cavity mold 510 clamped, the substrate film 514 on which an in-mold layer 513 is formed is sandwiched. The substrate film 514 is disposed so that the entire in-mold layer 513 is contained in the primary cavity 508. The area of the in-mold layer 513 is set to be smaller than that of a surface 515s of the primary molding resin 515 injected into the primary cavity 508.

The primary molding resin 515 supplied into the sprue 595 and the runner 596 is injected into the primary cavity 508 through the submarine gate 509, thereby molding the primary molding layer 515'. At this time, the in-mold layer 513 is transferred on a surface 515's of the primary molding layer 515'.

The area of the in-mold layer 513 is smaller than that of the surface 515's of the primary molding layer 515'. Accordingly, the in-mold layer 513 is transferred entirely within the surface 515's of the primary molding layer 515'.

As shown in Fig. 12B, the core mold 520 and a secondary-molding cavity mold 530 are clamped. The secondary-molding cavity mold 530 has a secondary cavity 511 that contains the entire core 501 on which the primary molding layer 515' is formed. In addition, in the secondary-molding cavity mold 530, a gate 512, a sprue 575, and a runner 576 are formed. The gate 512 is connected to the secondary cavity 511. The sprue 575 and the runner 576 are communicated with the gate 512.

A secondary molding resin 518 supplied into the sprue 575 and the runner 576 is injected into the secondary cavity 511 through the gate 512, thereby molding a secondary molding layer 518' that covers the entire surface 515's of the primary molding layer 515'. The in-mold layer 513 is also entirely covered with the secondary molding layer 518', and therefore no part of the in-mold layer 513 is exposed to outside. In this way, by setting the area of the in-mold layer 513 formed on the substrate film 514 as appropriate, the multicolor molded part according to this embodiment can be molded.

In the above embodiments, the multicolor molded parts obtained by molding the primary molding layer and the secondary molding layer are described. However, the present invention can be applied to a multicolor molded part obtained by molding a desired number of molding layers, in addition to the case where the two molding layers are molded.

### <Modified example>

The present invention is not limited to the above embodiment, and can be variously modified without departing from the gist of the present invention.

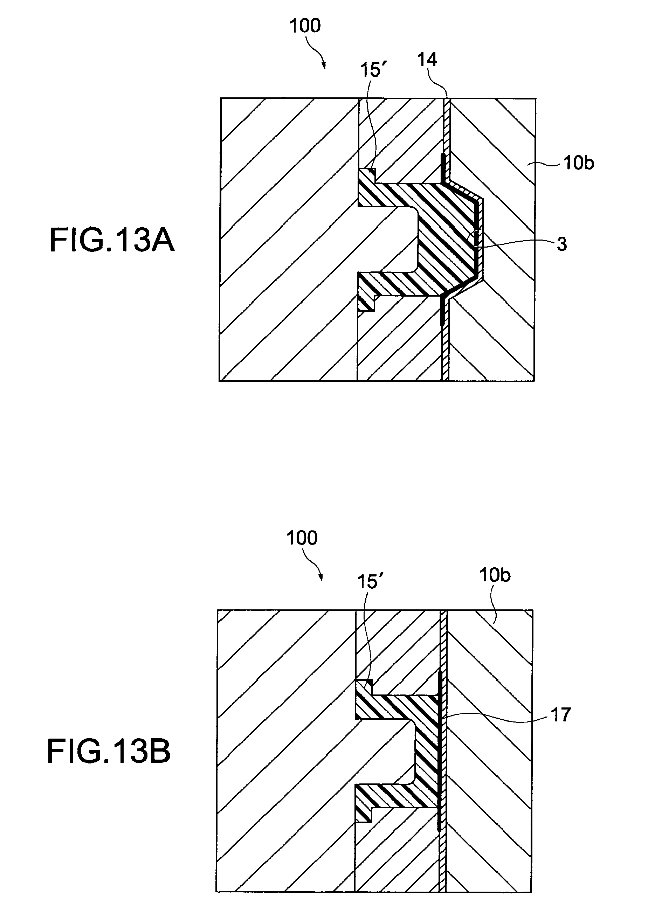

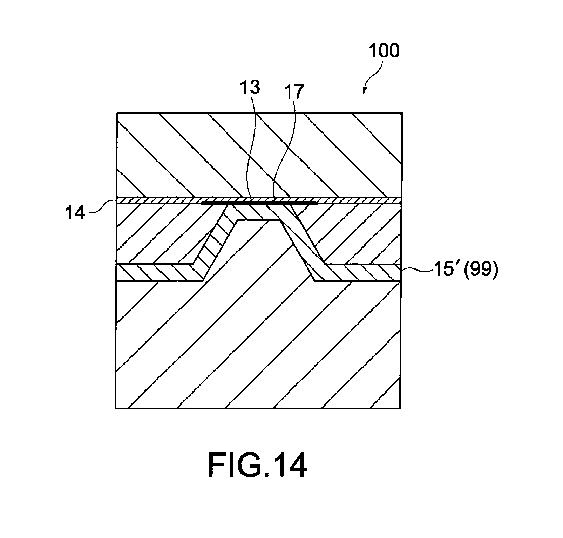

For example, Figs. 13A and 13B and 14 are diagrams each showing a modified example of the multicolor molding method, the multicolor molding apparatus, and the multicolor molded part according to the first embodiment of the present invention. In the multicolor molding apparatus 100 shown in Fig. 13A, the shape of the concave portion 3 formed in the second cavity member 10b is different from that in the first embodiment. In this way, the shape of the concave portion 3 is appropriately set within the range in which the substrate film 14 is not cut off in the concave portion 3, with the result that the primary molding layer 15' having the high degree of freedom in the shape can be molded.

In addition, in the multicolor molding apparatus 100 shown in Fig. 13B, the second cavity member 10b in which the concave portion is not formed is used. With this structure, the primary molding layer 15' whose bonding surface 17 is flat is molded.

In Fig. 14, a metal member 99 is molded as the primary molding layer 15'. In this way, the metal member 99 may be subjected to the drawing process, and the in-mold layer 13 of the substrate film 14 may be transferred on the bonding surface 17. Examples of the material of the metal member 99 include a magnesium alloy, an aluminum alloy, a steel material, and the like. It should be noted that in the modified example, the multicolor molding apparatus 100 is used as a vertical molding apparatus in consideration of the weight or the like of the metal member 99.

The present application contains subject matter related to that disclosed in Japanese Priority Patent Application JP 2009-159940 filed in the Japan Patent Office on July 6, 2009, the entire content of which is hereby incorporated by reference.

## Claims

1. A multicolor molding method, comprising:
sandwiching, between a first cavity member having a through hole and a second cavity member, a substrate film on which an in-mold layer is formed so that the in-mold layer is positioned between the through hole and the second cavity member, the second cavity member closing one of openings of the through hole;
disposing a core in a primary cavity formed of at least the through hole and injecting a first molding material into the primary cavity, to mold a primary molding layer on a surface of which the in-mold layer is transferred; and
disposing the core in a secondary cavity and injecting a second molding material into the secondary cavity, to mold a secondary molding layer that covers the in-mold layer, the core being provided with the primary molding layer.

2. The multicolor molding method according to claim 1,
wherein the second cavity member includes a concave portion that closes the opening of the through hole,
wherein the sandwiching of the substrate film includes sandwiching the substrate film between the first cavity member and the second cavity member so that the in-mold layer is positioned between the through hole and the concave portion, and
wherein the molding of the primary molding layer includes disposing the core in the primary cavity formed of the through hole and the concave portion and injecting the first molding material into the primary cavity, to mold the primary molding layer on the surface of which the in-mold layer is transferred.

3. The multicolor molding method according to claim 2,
wherein at least a part of the in-mold layer is sandwiched between the first cavity member and the second cavity member in an area where a rim of the through hole and a rim of the concave portion are in contact, and
wherein the molding of the primary molding layer includes taking the primary molding layer from the primary cavity so that the in-mold layer is cut in the area where the rim of the through hole and the rim of the concave portion are in contact.

4. The multicolor molding method according to claim 3,
wherein the through hole includes a protrusion hole that protrudes from an inner surface of the through hole, and
wherein the molding of the primary molding layer includes molding the primary molding layer having a protrusion portion corresponding to the protrusion hole.

5. The multicolor molding method according to claim 1,
wherein the first cavity member includes a gate connected to the through hole, and
wherein the molding of the primary molding layer includes injecting the first molding material into the primary cavity through the gate.

6. The multicolor molding method according to claim 4,
wherein the first cavity member includes a gate connected to the protrusion hole, and
wherein the molding of the primary molding layer includes injecting the first molding material into the primary cavity through the gate.

7. The multicolor molding method according to claim 1,
wherein the first cavity member includes the through hole that is plurally provided,
wherein the sandwiching of the substrate film includes sandwiching the substrate film between the first cavity member and the second cavity member so that the in-mold layer is positioned between the plurality of through holes and the second cavity member, the second cavity member closing openings of the plurality of through holes on one side,
wherein the molding of the primary molding layer includes disposing, in the primary cavity that is plurally provided and formed of at least the plurality of through holes, the core that is plurally provided, and injecting the first molding material into the plurality of primary cavities, to mold the primary molding layer that is plurally provided, on the surface of which the in-mold layer is transferred, and
wherein the molding of the secondary molding layer includes disposing, in the secondary cavity that is plurally provided, the plurality of cores on each of which the primary molding layer is formed, and injecting the second molding material into the plurality of secondary cavities, to mold the secondary molding layer that is plurally provided and covers the in-mold layer.

8. A multicolor molding apparatus, comprising:
a primary-molding cavity mold including a first cavity member and a second cavity member, the primary-molding cavity mold being capable of separating the first cavity member and the second cavity member from each other, the first cavity member having a through hole as a part of a primary cavity, the second cavity member closing one of openings of the through hole;
a core mold including a core disposed in the primary cavity, the core mold being clamped with the primary-molding cavity mold to perform injection molding of a primary molding layer; and
a secondary-molding cavity mold having a secondary cavity in which the core provided with the primary molding layer is disposed, the secondary-molding cavity mold being clamped with the core mold to mold a secondary molding layer that covers the primary molding layer.

9. The multicolor molding apparatus according to claim 8,
wherein the second cavity member includes a concave portion, the concave portion being a part of the primary cavity and closing the opening of the through hole.

10. The multicolor molding apparatus according to claim 9,
wherein the through hole has a protrusion hole that protrudes from an inner surface of the through hole so that injection molding of the primary molding layer including a protrusion portion is performed.

11. The multicolor molding apparatus according to claim 8,
wherein the first cavity member includes a gate connected to the through hole.

12. The multicolor molding apparatus according to claim 10,
wherein the first cavity member includes a gate connected to the protrusion hole.

13. A multicolor molded part, comprising:
a primary molding layer;
an in-mold layer that is transferred on a part of a surface of the primary molding layer; and
a secondary molding layer that is formed on the surface of the primary molding layer and entirely covers the in-mold layer to prevent the in-mold layer from being exposed.
